# EUROPÄISCHE PATENTSCHRIFT

(11) **EP 2 656 462 B1**
(45) Veröffentlichungstag und Bekanntmachung des Hinweises auf die Patenterteilung: **11.03.2015**
(21) Anmeldenummer: 11819043.8
(22) Anmeldetag: 21.12.2011
(51) Int. Cl.: H02G 5/04, B60M 1/34

(54) **SCHLEIFLEITUNG UND TRAGSCHIENE FÜR EINEN ÜBER EINE SCHLEIFLEITUNG VERSORGTEN WAGEN**
CONTACT LINE AND CARRIER RAIL FOR A CARRIAGE WHICH IS SUPPLIED WITH POWER VIA A CONTACT LINE
LIGNE DE CONTACT ET RAIL PORTEUR POUR UN CHARIOT ALIMENTÉ PAR UNE LIGNE DE CONTACT

(30) Priorität: 21.12.2010 AT 21072010
(43) Veröffentlichungstag der Anmeldung: 30.10.2013
(73) Patentinhaber: TGW Mechanics GmbH, 4600 Wels (AT)
(72) Erfinder: ANGLEITNER, Karl, A-4600 Wels (AT); WOLKERSTORFER, Christoph, A-4600 Wels (AT)
(74) Vertreter: Burger, Hannes
(86) Internationale Anmeldenummer: PCT/AT2011/050050
(87) Internationale Veröffentlichungsnummer: WO 2012/083333

(56) Entgegenhaltungen:
- EP-A1- 0 524 084
- DE-A1- 2 317 240
- DE-A1- 3 048 730
- DE-C1- 19 701 987
- DE-U1- 8 329 847
- FR-A- 1 253 131
- GB-A- 594 896

## Beschreibung

Die Erfindung betrifft eine Tragschiene, welche im Querschnitt C-förmig ausgebildet ist und im Bereich des oberen horizontalen Schenkels außenseitig eine Lauffläche für den Kontakt zu wenigstens einem Rad eines fahrbaren Wagens aufweist.

Schleifleitungen dienen der Übertragung elektrischer Energie an ein bewegtes Objekt und sind aus dem Stand der Technik grundsätzlich bekannt.

Beispielsweise zeigt die DE 197 01 987 C1 eine abhängbare mehrpolige Schleifleitung, bestehend aus einem Kunststoff-Strangpressprofil mit einer planen Basis und mehreren davon wegweisenden Rippen. Zwischen zwei Rippen ist jeweils ein elektrischer Leiter angeordnet. Zur Montage wird das Kunststoff-Strangpressprofil in ein Halteprofil eingeclipst beziehungsweise eingeschnappt.

Weiterhin zeigt die WO 2008/152032 A1 eine Schleifleitung, bei der mehrere elektrische Leiter in einem Holprofil angeordnet sind. Zur Befestigung der Schleifleitung weist das Hohlprofil zwei längliche Klammern auf, mit deren Hilfe die Schleifleitung auf ein Halteprofil aufgeclipst beziehungsweise aufgeschnappt werden kann.

Neben den oben genannten Beispielen existieren auch Schleifleitungen, die an ihrer Unterbeziehungsweise Rückseite mit stiftförmigen Fortsätzen ausgestattet sind, mit deren Hilfe die Schleifleitung in vorbereitete Löcher eingesteckt werden kann.

Nachteilig an den bekannten Systemen ist, dass spezielle Haltevorrichtungen oder speziell für die Montage der Schleifleitung vorgesehene Löcher benötigt werden, damit die Schleifleitungen an ihrem Bestimmungsort montiert werden können. Wie leicht einsehbar ist, wird dadurch die Montage der Schleifleitung verkompliziert und verteuert.

Die GB 594 896 A offenbart eine Tragschiene, welche im Querschnitt C-förmig ausgebildet ist und im Bereich des oberen horizontalen Schenkels außenseitig eine Lauffläche für den Kontakt zu wenigstens einem Rad eines fahrbaren Wagens aufweist, sowie mit einer Schleifleitung zur Übertragung elektrischer Energie an den Wagen ausgestattet ist.

Eine Tragschiene ist auch aus der DE 30 48 730 A1 bekannt, welche im Querschnitt kastenförmig ausgebildet ist und voneinander isoliert angeordnete elektrische Leiter zur Übertragung elektrischer Energie an einen Wagen umfasst. Einer der elektrischen Leiter ist an der Oberseite der Tragschiene angeordnet und in voneinander isolierte Längsabschnitte aufgeteilt.

Die DE 83 29 847 U1, DE 23 17 240 A1 und FR 1 253 131 A offenbaren Stromschienen, die einen elektrischen Isolator und in diesem eingebettete elektrische Leiter zur Übertragung elektrischer Energie an einen Wagen umfassen, wobei der Isolator den elektrischen Leiter bis auf eine für eine Stromabnahme vorgesehene Fläche umschließt.

Schließlich offenbart die EP 0 524 084 A1 eine Tragschiene zur Führung eines Transportwagens, welche durch ein aufwendig hergestelltes Formprofil gebildet ist und an diesem in Nuten angeordnete Schleifleitungen zur Übertragung elektrischer Energie an den Transportwagen aufweist.

Die Aufgabe der Erfindung ist es daher, eine verbesserte Tragschiene anzugeben. Insbesondere soll die Montage einer Schleifleitung vereinfacht werden, sodass eine Tragschiene der eingangs genannten Art kostengünstig hergestellt werden kann.

Die Aufgabe der Erfindung wird durch eine Tragschiene der eingangs genannten Art gelöst, bei welcher
- der untere horizontale Schenkel des C-förmigen Profils kürzer ausgebildet ist als der obere horizontale Schenkel und
- im Bereich des unteren horizontalen Schenkels eine Schleifleitung zur Übertragung elektrischer Energie an den Wagen auf die Tragschiene aufgesteckt ist, wobei die Schleifleitung zumindest einen elektrischen Leiter und einen elektrischen Isolator, welcher den zumindest einen elektrischen Leiter bis auf eine für eine Stromabnahme vorgesehene Fläche umschließt, umfasst und wobei der Isolator zumindest eine Nut aufweist, mit Hilfe der die Schleifleitung auf die Tragschiene aufgesteckt ist.

Erfindungsgemäß wird dadurch erreicht, dass die Schleifleitung besonders einfach an ihrem Bestimmungsort montiert werden kann. Zusätzliche Halteelemente wie Schrauben, Nieten, Klebstoff, Halteklammem und dergleichen können somit entfallen. Auch müssen zur Montage der Schleifleitung keine Löcher gebohrt werden, so wie dies für Schleifleitungen nach dem Stand der Technik häufig nötig ist.

Besonders vorteilhaft ist dabei, dass der untere horizontale Schenkel des C-förmigen Profils kürzer ausgebildet ist als der obere horizontale Schenkel. Auf diese Weise ist die Schleifleitung von oben durch den oberen horizontalen Schenkel des C-förmigen Profils geschützt ist, beispielsweise vor herabfallenden Gegenständen oder herunter tropfenden Flüssigkeiten.

Vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn der Isolator zumindest zwei sich in unterschiedliche Richtung öffnende Nuten zum Aufstecken der Schleifleitung auf in die zumindest zwei Nuten ragende Tragelemente umfasst. Die Schleifleitung ist daher ohne weitere Maßnahmen gegen Herausfallen gesichert, beispielsweise weil sich eine Nut nach oben hin, eine andere nach unten hin öffnet. Selbstverständlich gilt das Prinzip aber auch für andere Lagen.

Beispielsweise können zwei Nuten um 90° gegeneinander verdreht sein. Denkbar wäre beispielsweise auch, dass drei Nuten um jeweils 90° gegeneinander verdreht sind. Günstig ist es, wenn die zumindest eine Nut in Längsrichtung des Isolators ausgerichtet ist. Auf diese Weise kann die Schleifleileitung leicht auf ein Tragelement aufgeschoben werden, wenn ein Auf- oder Einstecken nicht erwünscht oder nicht möglich ist.

Günstig ist es auch, wenn der zumindest eine elektrische Leiter bandförmig ausgebildet ist, sein Breiten-Dicken-Verhältnis wenigstens 3:1, bevorzugt 5:1 und weiter bevorzugt 10:1 beträgt und er an einer seiner Breitseiten für die Stromabnahme vorbereitet ist.

Dadurch, dass der elektrische Leiter relativ dünn ist, kann er vergleichsweise leicht, beziehungsweise mit vergleichsweise engem Radius aufgerollt werden. Die Handhabung mit dem elektrischen Leiter wird daher maßgeblich vereinfacht.

Günstig ist es zudem, wenn die Schleifleitung bandförmig ausgebildet ist und ihr Breiten-Dicken-Verhältnis wenigstens 3:1, bevorzugt 5:1 und weiter bevorzugt 10:1 beträgt.

Dadurch, dass die Schleifleitung relativ dünn ist, kann sie ebenfalls vergleichsweise leicht, beziehungsweise mit vergleichsweise engem Radius aufgerollt werden. Die Handhabung mit der Schleifleitung wird daher ebenfalls maßgeblich vereinfacht.

Günstig ist es, wenn der Isolator den zumindest einen elektrischen Leiter im Querschnitt gesehen U-förmig oder C-förmig umschließt. Auf diese Weise wird eine besonders haltbare Schleifleitung erhalten, da der elektrische Leiter durch Formschluss im Isolatormaterial gehalten wird.

Günstig ist es weiterhin, wenn der zumindest eine elektrische Leiter eine Hinterschneidung aufweist, insbesondere trapezförmig ausgebildet ist, und derart in den Isolator eingebettet ist, dass ein durch die Hinterschneidung gebildeter Formschluss ein Herausfallen des zumindest einen elektrischen Leiters aus dem Isolator verhindert. Auf diese Weise wird eine weitere Variante für eine besonders haltbare Schleifleitung erhalten, da der elektrische Leiter wiederum durch Formschluss im Isolatormaterial gehalten wird.

Vorteilhaft ist es, wenn der Isolator und die für die Stromabnahme vorgesehene Breitseite des zumindest einen elektrischen Leiters eine ebene Fläche bilden. Dadurch kann die Schleifleitung nicht so leicht verschmutzen, beziehungsweise kann diese leicht gesäubert werden.

Vorteilhaft ist es aber auch, wenn die für die Stromabnahme vorgesehene Breitseite des zumindest einen elektrischen Leiters gegenüber dem Isolator nach innen versetzt ist und vom Isolator teilweise umschlossen ist. Auf diese Weise kann ein Berührungsschutz realisiert werden. Zudem bietet diese Variante der Erfindung auch eine gute Führung der Stromabnehmer.

Besonders vorteilhaft ist es, wenn die für die Stromabnahme vorgesehene Oberfläche des zumindest einen elektrischen Leiters konkav geformt ist. Durch die konkave Oberfläche des zumindest einen Leiters werden Stromabnehmer, welche auf der Schleifleitung aufliegen, gut geführt.

Besonders vorteilhaft ist es zudem, wenn der zumindest eine elektrische Leiter eine im Wesentlichen konstante Dicke aufweist. Auf diese Weise können die Leiter kostengünstig aus Bandmaterial hergestellt werden.

Eine besonders vorteilhafte Ausgestaltung einer erfindungsgemäßen Tragschiene mit C-förmigem Profil ergibt sich, wenn die offene Seite des Querschnitts durch eine Schleifleitung verschlossen ist. Somit können sich im Inneren der Tragschiene kein Schmutz und auch keine Feuchtigkeit ansammeln.

Eine besonders vorteilhafte Ausgestaltung einer erfindungsgemäßen Tragschiene mit C-förmigem Profil ergibt sich weiterhin, wenn eine Schleifleitung im Bereich des unteren horizontalen Schenkels auf die Tragschiene aufgesteckt ist. Dadurch kann die Schleifleitung einerseits sehr einfach montiert werden, nämlich indem sie einfach auf das C-Profil der Tragschiene aufgesteckt wird, andererseits kann sich die Schleifleitung auch nicht leicht lösen, da sie die Schwerkraft ja auf der Tragschiene hält.

Vorteilhaft ist es auch, wenn die Schleifleitung gegen Herausrutschen gesichert ist. Sollte die Reibung in der Steckverbindung (z.B. zwischen Schleifleitung und Tragschiene) nicht ausreichen, um die Schleifleitung sicher in ihrer Position zu halten, kann vorteilhaft eine Sicherung gegen Herausrutschen vorgesehen sein, sodass die Schleifleitung auch durch Formschluss in ihrer Position gehalten wird.

Günstig ist ein Verfahren zur Herstellung einer Schleifleitung zur Übertragung elektrischer Energie an ein bewegtes Objekt, umfassend die Schritte:
- Bereitstellen zumindest eines bandförmig ausgebildeten elektrischen Leiters,
- Extrudieren eines elektrischen Isolators, derart dass der zumindest eine elektrische Leiter bis auf eine an einer seiner Breitseiten angeordneten Fläche, welche für eine Stromabnahme vorgesehen ist, vom Material des Isolators umspritzt wird.

Bei dieser Variante wird die Schleifleitung praktisch in einem Arbeitsschritt hergestellt, da der elektrische Leiter direkt beim Extrudieren des elektrischen Isolators in diesen eingebettet wird. Nach dem Extrusionsvorgang ist die Schleifleitung im Wesentlichen fertig.

Günstig ist auch ein Verfahren zur Herstellung einer Schleifleitung zur Übertragung elektrischer Energie an ein bewegtes Objekt, umfassend die Schritte:
- Bereitstellen eines elektrischen Isolators, welcher eine nutförmige Vertiefung aufweist,
- Einlegen oder Einpressen zumindest eines bandförmig ausgebildeten elektrischen Leiters in die genannte Vertiefung, derart dass der zumindest eine elektrische Leiter bis auf eine an einer seiner Breitseiten angeordneten Fläche, welche für eine Stromabnahme vorgesehen ist, vom Isolator abgedeckt wird.

Bei dieser Variante der Erfindung wird die Schleifleitung in zwei Arbeitsschritten hergestellt. In einem ersten Schritt wird der elektrische Isolator hergestellt (z.B. extrudiert), in einem zweiten Schritt wird der elektrische Leiter im Isolator positioniert. Diese Variante ist von Vorteil, wenn z.B. ein direktes Umspritzen des elektrischen Leiters nicht möglich ist oder die Herstellung des Isolators und das Einlegen oder Einpressen des Leiters an zwei verschiedenen Orten, z.B. in zwei verschiedenen Firmen, erfolgt.

Eine vorteilhafte Variante der zuvor genannten Verfahren ergibt sich, wenn der zumindest eine elektrische Leiter beim Bereitstellen beziehungsweise Einlegen oder Einpressen von einer Rolle abgerollt wird. Dadurch, dass der elektrische Leiter aufgerollt ist, ergibt sich eine besonders einfache Handhabung bei der Herstellung der Schleifleitung. Insbesondere können so relativ lange Schleifleitungen hergestellt werden, ohne dass dazu übermäßig lange Produktionshallen nötig wären.

Eine weitere vorteilhafte Variante der zuvor genannten Verfahren ergibt sich, wenn die Schleifleitung nach dem Extrudieren des zumindest einen elektrischen Isolators beziehungsweise nach dem Einlegen oder Einpressen des zumindest einen elektrischen Leiters aufgerollt wird. Dadurch, dass die Schleifleitung aufgerollt wird, ergibt sich eine besonders einfache Handhabung im Produktionsprozess. Insbesondere können so wiederum relativ lange Schleifleitungen hergestellt werden, ohne dass dazu übermäßig lange Produktionshallen nötig wären.

Besonders vorteilhaft ist das Verfahren in Verbindung mit der zuvor genannten Variante. Das heißt, der elektrische Leiter wird bei der Herstellung der Schleifleitung abgerollt und die fertige Schleifleitung wird wieder aufgerollt. Wird der elektrische Leiter in den Isolator eingelegt, so ist es auch von Vorteil, wenn auch der Isolator bei der Herstellung der Schleifleitung von einer Rolle abgerollt wird.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einer beispielhaften Förderanlage;
- Fig. 2: ein erstes Beispiel einer Tragschiene mit C-förmigem Profil und unterschiedlich langen Schenkeln;
- Fig. 3: ein zweites Beispiel einer Tragschiene mit C-förmigem Profil und unterschiedlich langen Schenkeln;
- Fig. 4: eine Tragschiene mit C-förmigem Profil, das durch eine Schleifleitung verschlossen ist;
- Fig. 5: die in Fig. 4 gezeigte Schleifleitung in Detailansicht;
- Fig. 6: eine Abwandlung der in Fig. 5 gezeigten Schleifleitung;
- Fig. 7: eine Schleifleitung mit keilförmiger Nut in einem ersten Montageschritt;
- Fig. 8: die Schleifleitung aus Fig. 8 in einem zweiten Montageschritt;
- Fig. 9: eine Schleifleitung, bei der die elektrischen Leiter und der Isolator eine ebene Fläche bilden und Fig. 10 die Schleifleitung aus Fig. 9 bei dem die elektrischen Leiter ein konkave Oberfläche aufweisen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

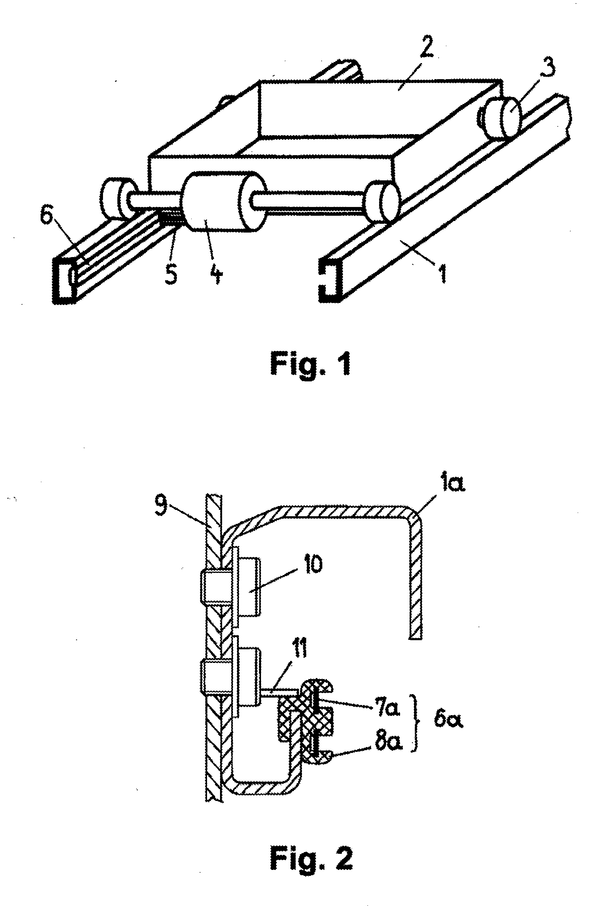

Fig. 1 zeigt einen Ausschnitt aus einer beispielhaften Förderanlage. Konkret sind in einer Längsrichtung (Förderrichtung) der Förderanlage zwei Tragschienen 1 angeordnet, auf denen ein Wagen 2 fahren kann. Der Wagen 2 umfasst einen kistenartigen Behälter, sowie vier Räder 3, mit deren Hilfe der Wagen 2 auf den Tragschienen bewegt werden kann. Zwei der Räder 3 sind in diesem Beispiel von einem Elektromotor 4 (gegebenenfalls mit integriertem Getriebe) angetrieben. Der Elektromotor 4 bezieht die dafür nötige Energie über Stromabnehmer 5, welche in Kontakt mit einer Schleifleitung 6 stehen, die in Längsrichtung der Förderanlage auf einer der beiden Tragschienen 1 angeordnet ist.

Fig. 2 zeigt ein erstes Beispiel für eine Tragschiene 1a, welche mit Hilfe von Schrauben 10 auf einem Träger 9 aufgeschraubt ist, mit einer darauf angeordneten Schleifleitung 6a. Alternativ könnte die Tragschiene 1a natürlich auch in einem Mauerwerk oder ähnlichem verankert sein. Konkret ist die Tragschiene 1a im Querschnitt C-förmig ausgebildet. Auf einem unteren horizontalen Schenkel der Tragschiene 1a ist die Schleifleitung 6a aufgesteckt. Der untere horizontale Schenkel des C-förmigen Profils ist dabei kürzer ausgebildet als der obere horizontale Schenkel, sodass die Schleifleitung 6a von oben durch den oberen horizontalen Schenkel geschützt ist, beispielsweise vor herabfallenden Gegenständen oder herunter tropfenden Flüssigkeiten. Vorteilhaft ist die Schleifleitung 6a gegen Herausrutschen gesichert, hier durch eine Sicherung 11. Beispielsweise kann diese durch in oder auf die Schrauben 10 aufgesteckte Kunststoffteile gebildet sein. Denkbar wäre auch, dass die Sicherung 11 durch eine Schiene gebildet ist, welche auf die Tragschiene 1a aufgeklebt oder aufgesteckt wird. Die Schleifleitung 6a selbst umfasst zumindest einen, hier zwei elektrische Leiter 7a und einen elektrischen Isolator 8a, welcher die elektrischen Leiter 7a bis auf eine für eine Stromabnahme vorgesehene Fläche umschließt. Zusätzlich umfasst der Isolator 8a zumindest eine in Längsrichtung des Isolators 8a ausgerichtete Nut, mit deren Hilfe die Schleifleitung 6a wie bereits erwähnt auf ein in die Nut ragendes Tragelement (hier gebildet durch den unteren horizontalen Schenkel des C-Profils) gesteckt werden kann.

Im gezeigten Beispiel sind die elektrischen Leiter 7a bandförmig ausgebildet und weisen ein Breiten-Dicken-Verhältnis von etwa 5:1 auf. Weitere bevorzugte Werte für das genannte Verhältnis sind 3:1 beziehungsweise auch 10:1. Die Stromabnahme erfolgt an einer seiner Breitseiten. Der Isolator 8a umschließt die elektrischen Leiter 7a im Querschnitt gesehen C-förmig.

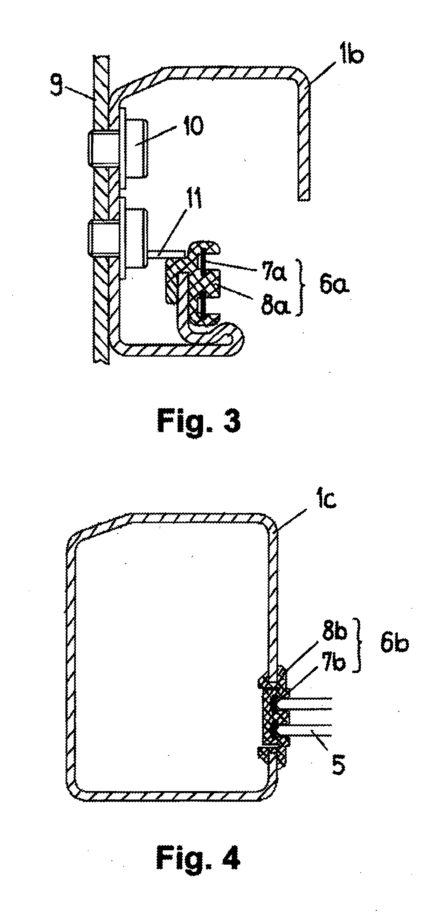

Fig. 3 zeigt nun eine alternative Anordnung, welcher der in der Fig. 2 gezeigten Anordnung sehr ähnlich ist. Im Unterschied dazu ist aber die Tragschiene 1b etwas anders ausgebildet als die Tragschiene 1a. Zwar ist der untere horizontale Schenkel des C-förmigen Profils ebenfalls kürzer ausgebildet als der obere horizontale Schenkel, allerdings wird dieser anders hergestellt. Konkret ist der untere Schenkel im vorderen Bereich einmal umgebogen. Das C-Profil wird damit insgesamt vergleichsweise steif. Vorteilhaft ist auch, dass mit demselben Blechzuschnitt, also Blechen derselben Breite, einerseits herkömmliche C-Profile hergestellt werden können, andererseits auch die speziellen in Fig. 3 dargestellten C-Profile.

Fig. 4 zeigt nun eine weitere Variante der Erfindung. Dabei ist eine Tragschiene 1c im Querschnitt C-förmig ausgebildet, und die offene Seite des Querschnitts ist durch eine Schleifleitung 6b verschlossen, welche wiederum zwei von einem Isolator 8b umgebene, elektrische Leiter 7b umfasst. Die Schleifleitung 6b, beziehungsweise dessen Isolator 8b umfasst zwei in Längsrichtung der Schleifleitung 6b angeordnete und sich in unterschiedliche Richtung öffnende Nuten zum Aufstecken der Schleifleitung 6b auf in die Nuten ragende Tragelemente. Konkret öffnet sich eine Nut nach oben hin, die andere nach unten hin. In die Nuten ragt jeweils ein Schenkel des C-förmigen Profils der Tragschiene 1c. Dadurch ergeben sich einige Vorteile. Beispielsweise ist die Schleifleitung 6b ohne weitere Maßnahmen gegen Herausfallen gesichert. Zudem wird das C-förmige Profil der Tragschiene 1c durch die Schleifleitung 6b verschlossen, weswegen sich im Inneren der Tragschiene 1c kein Schmutz und auch keine Feuchtigkeit ansammeln können. Die Tragschiene 1c ist daher in ihrem Inneren besonders gut gegen Korrosion geschützt.

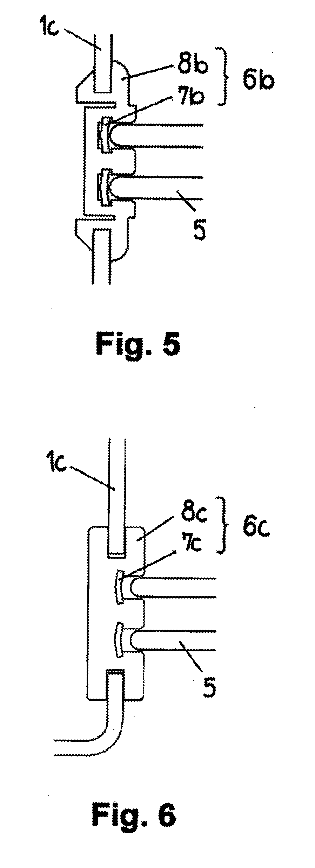

Fig. 5 zeigt die in Fig. 4 vorgestellte Schleifleitung 6b nochmals im Detail in Vorderansicht. Gut zu erkennen sind die oben und unten angeordneten horizontalen Einschnitte im Isolator 8b, welche für einen guten Ausgleich von Fertigungstoleranzen sorgen und das Einschieben oder Einklemmen der Schleifleitung 6b in die Tragschiene 1c erleichtern. Gut zu erkennen ist auch, dass die Schleifleitung 6b bandförmig ausgebildet ist und ein Breiten-Dicken-Verhältnis von etwa 5:1 aufweist. Weitere vorteilhafte Werte wären 3:1 beziehungsweise 10:1.

Aus der Fig. 5 ist weiterhin gut zu erkennen, dass die Leiter 7b eine im Wesentlichen konstante Dicke aufweisen und die für die Stromabnahme vorgesehen Oberfläche der elektrischen Leiters 7b konkav geformt ist. Durch die konkave Oberfläche der Leiter 7b werden die Stromabnehmer 5 gut geführt. Ist der Leiter 7b im Gegenzug auf der Rückseite konvex, beispielsweise weil ein Bandmaterial mit im Wesentlichen konstanter Dicke für seine Herstellung verwendet wurde, so lässt sich der Leiter 7b überdies leicht in die vorgesehene Nut im Isolator 8b eindrücken (falls der Leiter 7b nicht eingeschoben oder direkt mit dem Isolator 8b umspritzt wird). Wegen der konstanten Dicke der Leiter 7b können diese zudem kostengünstig aus Flachmaterial hergestellt werden.

Schließlich ist auch gut zu erkennen, dass die für die Stromabnahme vorgesehene Breitseite des zumindest einen elektrischen Leiters 7b gegenüber dem Isolator 8b nach innen versetzt ist und vom Isolator 8b teilweise umschlossen ist. Einerseits bewirkt dies eine zusätzliche Führung der Stromabnehmer 5, andererseits stellt dies auch einen Berührungsschutz dar, sodass von den unter Spannung stehenden Leitern 7b nur eine geringe Gefahr für den Menschen ausgeht.

Fig. 6 zeigt eine alternative Ausführungsform einer Schleifleitung 6c, welche der in der Fig. 5 gezeigten Schleifleitung 6b sehr ähnlich ist. Im Unterschied dazu fehlen aber die horizontalen Einschnitte. Der Isolator 8c wird somit mechanisch steifer. Um dies auszugleichen, kann der Isolator 8c aus einem besonders weichen und leicht verformbaren Material gefertigt sein.

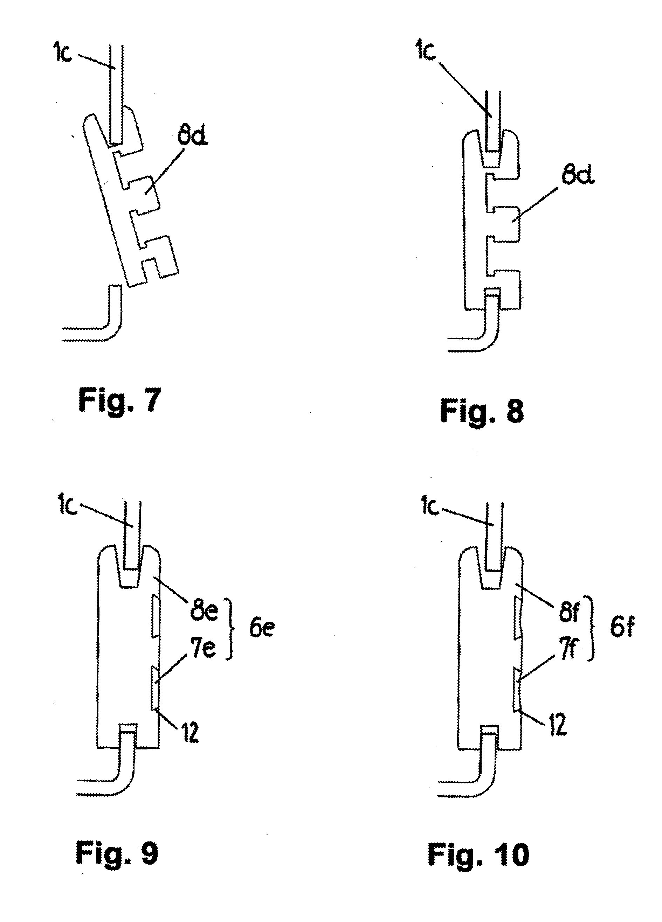

Die Figuren 7 und 8 zeigen eine weitere Variante der Erfindung, welche der bereits in der Fig. 6 gezeigten Variante sehr ähnlich ist. Im Unterschied dazu ist die obere Nut im Isolator 8d keilförmig erweitert, sodass der Isolator 8d leichter in der Tragschiene 1c montiert werden kann. Fig. 7 zeigt einen Zustand, in dem der Isolator teilweise in der Tragschiene 1c montiert ist, Fig. 8 dagegen den fertigen Zustand. Der Isolator 8d wird also zuerst nach oben hin auf das C-förmige Profil der Tragschiene 1c aufgesteckt, dann mit der Unterkante nach innen gekippt und schließlich nach unten hin auf das C-förmige Profil der Tragschiene 1c aufgesteckt. Abschließend müssen nur noch die elektrischen Leiter in die dafür vorgesehenen Nuten eingedrückt oder eingeschoben werden.

Ganz generell kann die Montage der elektrischen Leiter vor der Montage eines Isolators 8a..8d in der Tragschiene 1a..1c erfolgen oder eben erst danach.

Fig. 9 zeigt eine weitere Variante der Erfindung. Dabei bildet der Isolator 8e und die für die Stromabnahme vorgesehene Breitseite der elektrischen Leiter 7e eine ebene Fläche. Der Isolator 8e umschließt einen elektrischen Leiter 7e im Querschnitt gesehen daher U-förmig. Zudem weisen die elektrischen Leiter 7e eine Hinterschneidung 12 auf. Insbesondere sind die Leiter 7e im Querschnitt gesehen trapezförmig ausgebildet und derart in den Isolator 8e eingebettet, dass ein durch die Hinterschneidung 12 gebildeter Formschluss ein Herausfallen der elektrischen Leiter 7e aus dem Isolator 8e verhindert.

Fig. 10 zeigt schließlich eine leicht abgewandelte Variante einer Schleifleitung 6f, bei der die elektrischen Leiter 7f konkav ausgebildet sind.

In den vorangegangenen Figuren wurde stets davon ausgegangen, dass die Schleifleitungen 6a..6f jeweils zwei elektrische Leiter 7a..7f aufweisen. Dies ist natürlich kein zwingender Umstand. Selbstverständlich kann die Schleifleitung 6a..6f auch mehr als zwei Leiter 6a..6f umfassen.

Weiterhin kann die Schleifleitung 6a..6f von einer Rolle abgerollt und beispielsweise in einem Stück an ihrem Bestimmungsort montiert werden. Denkbar ist auch, dass die Schleifleitung 6a..6f in Einzelstücken geliefert wird, beispielsweise mit jeweils 2,5 bis 3m Länge, die dann zu einer beliebig langen Schleifleitung 6a..6f zusammengesetzt werden können. Dazu können die Einzelstücke z.B. mit einer Schwalbenschwanzverbindung, Klammern oder ähnlichem zusammengesetzt werden. Schließlich besteht eine besonders vorteilhafte Variante der Erfindung auch darin, dass der Isolator 8a..8f in (geraden) Einzelstücken geliefert wird, die wiederum zu einem beliebig langen Isolator 8a..8f zusammengesetzt werden können, in den dann ein einstückiger Leiter 7a..7f eingeschoben, eingesteckt oder eingelegt wird. Vorteilhaft ist dabei, dass Stöße, wie sie bei mehrstückigen Leitern 7a..7f vorliegen, vermieden werden, wodurch der Stromabnehmer 5, insbesondere dessen Kohlen, geschont werden. Die Anordnung kann so länger störungsfrei in Betrieb sein. Vorteilhaft wird der Leiter 7a..7f bei dieser Variante der Erfindung zur Lagerung und zum Transport aufgerollt.

Die Ausführungsbeispiele zeigen mögliche Ausführungsvarianten einer Schleifleitung 6a..6f beziehungsweise einer erfindungsgemäßen Tragschiene 1a..1c, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Insbesondere können die Merkmale der in den Figuren 5 bis 10 gezeigten Schleifleitungen 6b..6f auch in die in der Figur 2 dargestellte Schleifleitung 6a integriert sein.

Weiterhin wird darauf hingewiesen, dass eine reale Förderanlage mehr Bestandteile und andere Bestandteile als dargestellt umfassen kann. Zudem wird darauf hingewiesen, dass zum besseren Verständnis des Aufbaus der Schleifleitung 6a..6f oder der Tragschiene 1a..1c diese bzw. deren Bestandteile teilweise unmaßstäblich und/oder vergrößert und/oder verkleinert dargestellt wurden.

### Bezugszeichenaufstellung

- 1, 1a..1c: Tragschiene
- 2: Wagen
- 3: Rad
- 4: Motor
- 5: Stromabnehmer

- 6, 6a..6f: Schleifleitung
- 7a..7f: elektrischer Leiter
- 8a..8f: Isolator
- 9: Träger
- 10: Schraube

- 11: Sicherung
- 12: Hinterschneidung

## Patentansprüche

1. Tragschiene (1a, 1b), welche im Querschnitt C-förmig ausgebildet ist und im Bereich des oberen horizontalen Schenkels außenseitig eine Lauffläche für den Kontakt zu wenigstens einem Rad (3) eines fahrbaren Wagens (2) aufweist,
**dadurch gekennzeichnet, dass**
- der untere horizontale Schenkel des C-förmigen Profils kürzer ausgebildet ist als der obere horizontale Schenkel und
- im Bereich des unteren horizontalen Schenkels eine Schleifleitung (6a) zur Übertragung elektrischer Energie an den Wagen (2) auf die Tragschiene (1a, 1b) aufgesteckt ist, wobei die Schleifleitung (6a) zumindest einen elektrischen Leiter (7a..7f) und einen elektrischen Isolator (8a..8f), welcher den zumindest einen elektrischen Leiter (7a..7f) bis auf eine für eine Stromabnahme vorgesehene Fläche umschließt, umfasst und wobei der Isolator (8a..8f) zumindest eine Nut aufweist, mit Hilfe der die Schleifleitung (6, 6a..6f) auf die Tragschiene (1a, 1b) aufgesteckt ist.

2. Tragschiene (1a, 1b) nach Anspruch 1, **dadurch gekennzeichnet, dass** der Isolator (8b..8f) zumindest zwei sich in unterschiedliche Richtung öffnende Nuten zum Aufstecken der Schleifleitung (6b..6f) auf in die zumindest zwei Nuten ragende Tragelemente umfasst.

3. Tragschiene (1a, 1b) nach Anspruch 1 oder 2, **dadurch gekennzeichnet, dass** die zumindest eine Nut in Längsrichtung des Isolators (8a..8f) ausgerichtet ist.

4. Tragschiene (1a, 1b) nach einem der Ansprüche 1 bis 3, **dadurch gekennzeichnet, dass** der zumindest eine elektrische Leiter (7a..7f) bandförmig ausgebildet ist, sein Breiten-Dicken-Verhältnis wenigstens 3:1, bevorzugt 5:1 und weiter bevorzugt 10:1 beträgt und er an einer seiner Breitseiten für die Stromabnahme vorbereitet ist.

5. Tragschiene (1a, 1b) nach einem der Ansprüche 1 bis 4, **dadurch gekennzeichnet, dass** diese bandförmig ausgebildet ist und ihr Breiten-Dicken-Verhältnis wenigstens 3:1, bevorzugt 5:1 und weiter bevorzugt 10:1 beträgt.

6. Tragschiene (1a, 1b) nach einem der Ansprüche 1 bis 5, **dadurch gekennzeichnet, dass** der Isolator (8a..8f) den zumindest einen elektrischen Leiter (7a..7f) im Querschnitt gesehen U-förmig oder C-förmig umschließt.

7. Tragschiene (1a, 1b) nach einem der Ansprüche 1 bis 6, **dadurch gekennzeichnet, dass** der zumindest eine elektrische Leiter (7c, 7e, 7f) eine Hinterschneidung (12) aufweist, insbesondere trapezförmig ausgebildet ist, und derart in den Isolator (8c, 8e, 8f) eingebettet ist, dass ein durch die Hinterschneidung (12) gebildeter Formschluss ein Herausfallen des zumindest einen elektrischen Leiters (7c, 7d, 7e) aus dem Isolator (8c, 8d, 8e) verhindert.

8. Tragschiene (1a, 1b) nach einem der Ansprüche 1 bis 7, **dadurch gekennzeichnet, dass** der Isolator (8e, 8f) und die für die Stromabnahme vorgesehene Breitseite des zumindest einen elektrischen Leiters (7e, 7f) eine ebene Fläche bilden.

9. Tragschiene (1a, 1b) nach einem der Ansprüche 1 bis 7, **dadurch gekennzeichnet, dass** die für die Stromabnahme vorgesehene Breitseite des zumindest einen elektrischen Leiters (7a..7d) gegenüber dem Isolator (8a..8d) nach innen versetzt ist und vom Isolator (8a..8d) teilweise umschlossen ist.

10. Tragschiene (1a, 1b) nach einem der Ansprüche 1 bis 9, **dadurch gekennzeichnet, dass** die für die Stromabnahme vorgesehen Oberfläche des zumindest einen elektrischen Leiters (7b, 7c, 7f) konkav geformt ist.

11. Tragschiene (1a, 1b) nach einem der Ansprüche 1 bis 10, **dadurch gekennzeichnet, dass** der zumindest eine elektrische Leiter (7a..7e) eine im Wesentlichen konstante Dicke aufweist.

12. Tragschiene (1a, 1b) nach einem der Ansprüche 1 bis 11, **dadurch gekennzeichnet, dass** die Schleifleitung (6a) gegen Herausrutschen gesichert ist.

## Claims

1. Carrier rail (1a, 1b) which has a C-shaped cross section and on the outside in the region of the upper horizontal leg has a running surface for contacting at least one wheel (3) of a moveable carriage (2),
**characterized in that**
- the lower horizontal leg of the C-shaped profile is embodied to be shorter than the upper horizontal leg and
- in the region of the lower horizontal leg, a contact line (6a) for transmitting electrical energy to the carriage (2) is plugged onto the carrier rail (1a, 1b), and the contact line (6a) comprises at least one electrical conductor (7a..7f) and an electrical insulator (8a..8f), which surrounds the at least one electrical conductor (7a..7f) with the exception of an area which is provided for collecting current, and the insulator (8a..8f) has at least one groove which enables the contact line (6, 6a..6f) to be plugged onto the carrier rail (1a, 1b).

2. Carrier rail (1a, 1b) according to claim 1, **characterized in that** the insulator (8b..8f) comprises at least two grooves which open in different directions and are provided for plugging the contact line (6b..6f) onto carrier elements projecting into the at least two grooves.

3. Carrier rail (1a, 1b) according to claim 1 or 2, **characterized in that** the at least one groove is oriented in longitudinal direction of the insulator (8a..8f).

4. Carrier rail (1a, 1b) according to one of claims 1 to 3, **characterized in that** the at least one electrical conductor (7a..7f) is embodied to be band-shaped, its width/thickness ratio is at least 3:1, preferably 5:1 and more preferably 10:1, and at one of its wide sides, it is prepared for the current collection.

5. Carrier rail (1a, 1b) according to one of claims 1 to 4, **characterized in that** the latter is embodied to be band-shaped and its width/thickness ratio is at least 3:1, preferably 5:1 and more preferably 10:1.

6. Carrier rail (1a, 1b) according to one of claims 1 to 5, **characterized in that** the insulator (8a..8f) surrounds the at least one electrical conductor (7a..7f) according to a U-shape or C-shape as seen in cross section.

7. Carrier rail (1a, 1b) according to one of claims 1 to 6, **characterized in that** the at least one electrical conductor (7c, 7e, 7f) has an undercut (12), is embodied to be particularly trapezoid, and is embedded in the insulator (8c, 8e, 8f) in such a way that a positive locking established by the undercut (12) prevents the at least one electrical conductor (7c, 7d, 7e) from falling out of the insulator (8c, 8d, 8e).

8. Carrier rail (1a, 1b) according to one of claims 1 to 7, **characterized in that** the insulator (8e, 8f) and the wide side of the at least one electrical conductor (7e, 7f) provided for collecting current form a flat area.

9. Carrier rail (1a, 1b) according to one of claims 1 to 7, **characterized in that** the wide side of the at least one electrical conductor (7a..7d) provided for collecting current is arranged to be offset towards the inside with respect to the insulator (8a..8d) and is partially surrounded by the insulator (8a..8d).

10. Carrier rail (1a, 1b) according to one of claims 1 to 9, **characterized in that** the surface of the at least one electrical conductor (7b, 7c, 7f) provided for collecting current is designed to be concave.

11. Carrier rail (1a, 1b) according to one of claims 1 to 10, **characterized in that** the at least one electrical conductor (7a..7e) has an essentially constant thickness.

12. Carrier rail (1a, 1b) according to one of claims 1 to 11, **characterized in that** the contact line (6a) is secured against slipping out.

## Revendications

1. Rail porteur (1a, 1b) avec une section en forme de C et qui présente, au niveau du montant horizontal supérieur, à l'extérieur, une surface de roulement pour le contact avec au moins une roue (3) d'un chariot mobile (2),
**caractérisé en ce que**
- le montant horizontal inférieur du profil en forme de C est plus court que le montant horizontal supérieur et
- au niveau du montant horizontal inférieur, est emboîtée une ligne de contact (6a) pour la transmission d'énergie électrique au chariot (2) sur le rail porteur (1a, 1b), la ligne de contact (6a) comprenant au moins un conducteur électrique (7a ... 7f) et un isolateur électrique (8a ... 8f) qui entoure l'au moins un conducteur électrique (7a ... 7f) à l'exception d'une surface prévue pour une absorption de courant et l'isolateur (8a ... 8f) comprenant au moins une rainure grâce à laquelle la ligne de contact (6, 6a ... 6f) est emboîtée sur le rail porteur (1a, 1b).

2. Rail porteur (1a, 1b) selon la revendication 1, **caractérisé en ce que** l'isolateur (8a ... 8f) comprend au moins deux rainures s'ouvrant dans des directions différentes pour l'emboîtement de la ligne de contact (6b ... 6f) sur les deux éléments porteurs dépassant dans les au moins deux rainures.

3. Rail porteur (1a, 1b) selon la revendication 1 ou 2, **caractérisé en ce que** l'au moins une rainure est orientée dans la direction longitudinale de l'isolateur (8a ... 8f).

4. Rail porteur (1a, 1b) selon l'une des revendications 1 à 3, **caractérisé en ce que** l'au moins un conducteur électrique (7a ... 7f) présente la forme d'une bande, son rapport largeur-épaisseur est d'au moins 3:1, de préférence de 5:1 et de préférence de 10:1 et il est préparé, au niveau d'une de ses largeurs, pour l'absorption de courant.

5. Rail porteur (1a, 1b) selon l'une des revendications 1 à 4, **caractérisé en ce que** celui-ci présente la forme d'une bande et son rapport largeur-épaisseur est d'au moins 3:1, de préférence de 5:1 et de préférence de 10:1.

6. Rail porteur (1a, 1b) selon l'une des revendications 1 à 5, **caractérisé en ce que** l'isolateur (8a ... 8f) entoure l'au moins un conducteur électrique (7a ... 7f) avec une section en forme de U ou de C.

7. Rail porteur (1a, 1b) selon l'une des revendications 1 à 6, **caractérisé en ce que** l'au moins un conducteur électrique (7c, 7e, 7f) présente une contre-dépouille (12), présentant plus particulièrement une forme trapézoïdale, et est intégrée dans l'isolateur (8c, 8e, 8f) de façon à ce qu'une complémentarité de forme formée la contre-dépouille (12) empêche la chute de l'au moins un conducteur électrique (7c, 7d, 7e) hors de l'isolateur (8c, 8d, 8e).

8. Rail porteur (1a, 1b) selon l'une des revendications 1 à 7, **caractérisé en ce que** l'isolateur (8e, 8f) et le côté large prévu pour l'absorption de courant de l'au moins un conducteur électrique (7e, 7f) forment une surface plane.

9. Rail porteur (1a, 1b) selon l'une des revendications 1 à 7, **caractérisé en ce que** le côté large prévu pour l'absorption de courant de l'au moins un conducteur électrique (7a ... 7d) est décalé vers l'intérieur par rapport à l'isolateur (8a ... 8d) et est partiellement entourée par l'isolateur (8a ... 8d).

10. Rail porteur (1a, 1b) selon l'une des revendications 1 à 9, **caractérisé en ce que** la surface prévue pour l'absorption de courant de l'au moins un conducteur électrique (7b, 7c, 7f) présente une forme concave.

11. Rail porteur (1a, 1b) selon l'une des revendications 1 à 10, **caractérisé en ce que** l'au moins un conducteur électrique (7a ... 7e) présente une épaisseur globalement constante.

12. Rail porteur (1a, 1b) selon l'une des revendications 1 à 11, **caractérisé en ce que** la ligne de contact (6a) est sécurisée contre un glissement.
